# DEMANDE DE BREVET EUROPEEN

(11) **EP 1 096 764 A1**
(43) Date de publication de la demande: **02.05.2001**
(21) Numéro de dépôt: 00420219.8
(22) Date de dépôt: 25.10.2000
(51) Int. Cl.: H04M 3/22, H04M 3/18, H04Q 1/14, H01R 4/24

(54) **Installation téléphonique incorporant un dispositif de contrôle et/ou de régulation**

(30) Priorité: 28.10.1999 FR 9913760
(71) Demandeur: MECELEC INDUSTRIES, F-07300 Tournon sur Rhône (FR)
(72) Inventeur: Chapon, Michel, 07300 Glun (FR); Labrot, Jean-Mary, 75009 Paris (FR)
(74) Mandataire: Myon, Gérard Jean-Pierre

(57) **Abrégé**

Ce dispositif (1) comprend un circuit électronique de contrôle et/ou de régulation du paramètre et une enveloppe (10) de protection du circuit (2) définissant deux zones (118, 128) aptes à recevoir chacune un conducteur (21, 22) de la paire considérée dans une position de raccordement électrique au circuit. Cette enveloppe (10) forme un organe (15) de dévrillage et de guidage (F₃) des conducteurs vers ces zones (118, 128).

Ce dispositif est aisé à mettre en place sur une paire, même torsadée, avec un risque d'erreur minimisé.

## Description

L'invention a trait à un dispositif de contrôle et/ou de régulation d'un paramètre physique du courant transitant dans une paire de conducteurs et à une installation téléphonique équipée d'un tel dispositif.

Dans le domaine de la téléphonie, il est connu que certains paramètres du courant transitant dans une paire de conducteurs doivent être contrôlés, et en particulier limités, notamment pour des questions de sécurité. Dans certains pays, les centraux téléphoniques sont équipés, pour chaque paire de conducteurs, d'un dispositif de limiteur de courant disposé au niveau de connecteurs d'entrée ou de sortie du central ou sur des circuits électroniques spécifiques. Dans d'autres pays, dont la France, les centraux téléphoniques ne sont pas protégés et il est requis de tous les téléphones raccordés au réseau qu'ils soient équipés d'un dispositif limiteur de courant, ce qui majore d'autant le prix de revient des appareils et ne permet pas nécessairement l'utilisation d'appareils acquis dans un autre état. La modification de l'ensemble des centraux téléphoniques d'un pays pour incorporer des cartes électroniques pourvues de limiteurs de courant ou pour modifier les connecteurs d'entrée et/ou de sortie des centraux induirait une charge financière considérable, de telle sorte que les opérateurs des pays concernés ont, jusqu'à présent, renoncé à une telle modification.

C'est à ces problèmes qu'entend plus particulièrement remédier l'invention en proposant un dispositif de contrôle et/ou de régulation qui peut être branché directement sur une paire de conducteurs, sans modification des connecteurs d'entrée ou de sortie d'une installation telle qu'un central téléphonique et ce, malgré le fait que les paires de conducteurs sont généralement torsadées, ce qui rend habituellement leur manipulation difficile.

Dans cet esprit, l'invention concerne un dispositif de contrôle et/ou de régulation d'un paramètre physique du courant transitant dans une paire de conducteurs d'une installation téléphonique, comprenant un circuit électronique de contrôle et/ou de régulation de ce paramètre. Ce dispositif comprend également une enveloppe de protection de ce circuit définissant deux zones aptes à recevoir chacune un conducteur de cette paire, dans une position de raccordement électrique à ce circuit, cette enveloppe formant également un organe de dévrillage et de guidage des conducteurs vers ces zones.

Grâce à l'enveloppe du dispositif, celui-ci peut être inséré en tout point d'une paire de conducteurs d'une ligne téléphonique de façon aisée, car l'organe de dévrillage et de guidage permet à un technicien de positionner efficacement les conducteurs dans les zones de réception prévues dans le dispositif alors même qu'il est amené à travailler dans une nappe de conducteurs pouvant comporter plusieurs milliers de paires. L'enveloppe permet d'éviter un endommagement accidentel des circuits lors des manipulations du dispositif et également d'isoler l'un par rapport à l'autre deux circuits de deux dispositifs voisins insérés dans une même nappe de paires de conducteurs.

Selon des aspects avantageux mais non obligatoires de l'invention, le dispositif incorpore une ou plusieurs des caractéristiques suivantes :
- L'organe de dévrillage et de guidage est constitué par une partie de l'enveloppe apte à être inséré entre les conducteurs de la paire précitée. Ainsi, c'est le mouvement d'insertion de cet organe entre les conducteurs qui permet leur dévrillage au niveau du dispositif, un positionnement adéquat de ces conducteurs pouvant alors être obtenu.
- L'organe de dévrillage et de guidage a, en coupe transversale, un profil en forme de coin. Ce profil permet un écartement progressif des conducteurs au cours de son mouvement d'introduction entre les conducteurs. Dans ce cas, il présente avantageusement deux surfaces divergentes, à partir de l'arête d'introduction entre les conducteurs, en direction des zones de réception.
- Des moyens de verrouillage des conducteurs dans les zones de réception sont prévus. Ces moyens comprennent avantageusement au moins un tiroir pourvu d'au moins un poussoir apte à diriger un conducteur vers un contact auto-dénudant raccordé au circuit. On peut prévoir que ce tiroir est pourvu d'un poussoir apte à coopérer avec une partie fixe de l'enveloppe pour sectionner le conducteur. On peut également prévoir que le tiroir est pourvu de moyens de retenue par rapport à une partie principale de l'enveloppe. Selon un aspect avantageux de l'invention, le dispositif comprend deux tiroirs disposés en vis-à-vis et aptes à diriger, par un mouvement de rapprochement de ces tiroirs, chacun un conducteur vers une zone de réception.

L'invention concerne également une installation téléphonique, et notamment un central téléphonique, qui est équipée d'au moins un dispositif tel que précédemment décrit. Une telle installation est sécurisée, par exemple à l'encontre d'un courant trop important ou d'une surtension, indépendamment des équipements qui sont branchés sur cette installation, à savoir des terminaux téléphoniques ou télématiques, tels qu'un poste téléphonique, un télécopieur, un modem, un terminal du type Minitel (marque déposée),...

L'invention sera mieux comprise et d'autres avantages de celle-ci apparaîtront plus clairement à la lumière de la description qui va suivre d'un mode de réalisation d'un dispositif de contrôle et/ou de régulation conforme à son principe, donnée uniquement à titre d'exemple et faite en référence aux dessins annexés dans lesquels :
- la figure 1 est une vue en perspective éclatée d'un dispositif conforme à l'invention ;
- la figure 2 est une vue en perspective du dispositif de la figure 1 lors d'une première étape d'utilisation ;
- la figure 3 est une vue analogue à la figure 2 lors d'une seconde étape d'utilisation ;
- la figure 4 est une vue de côté du dispositif dans la configuration de la figure 3 ;
- la figure 5 est une vue analogue à la figure 2 dans une troisième étape d'utilisation et
- la figure 6 est une vue de côté du dispositif dans la configuration de la figure 5.

Le dispositif 1 représenté sur les figures comprend un circuit électronique 2 de limitation de courant. Le circuit 2 est représenté uniquement par sa carte support, des composants non représentés étant montés sur l'une ou les deux faces supérieure et inférieure de cette plaque. Le circuit 2 est pourvu de quatre contacts auto-dénudant 3, 4, 5 et 6, les contacts 3 et 4 étant prévus sur une face du circuit 2 alors que les contacts 5 et 6 sont prévus sur la face opposée. Les contacts 3 à 6 sont individuellement raccordés aux composants du circuit 2.

Une enveloppe 10 est prévue pour être montée autour du dispositif 1 et comprend deux demi-coques 11 et 12 sur lesquelles sont respectivement montés des tiroirs 13 et 14.

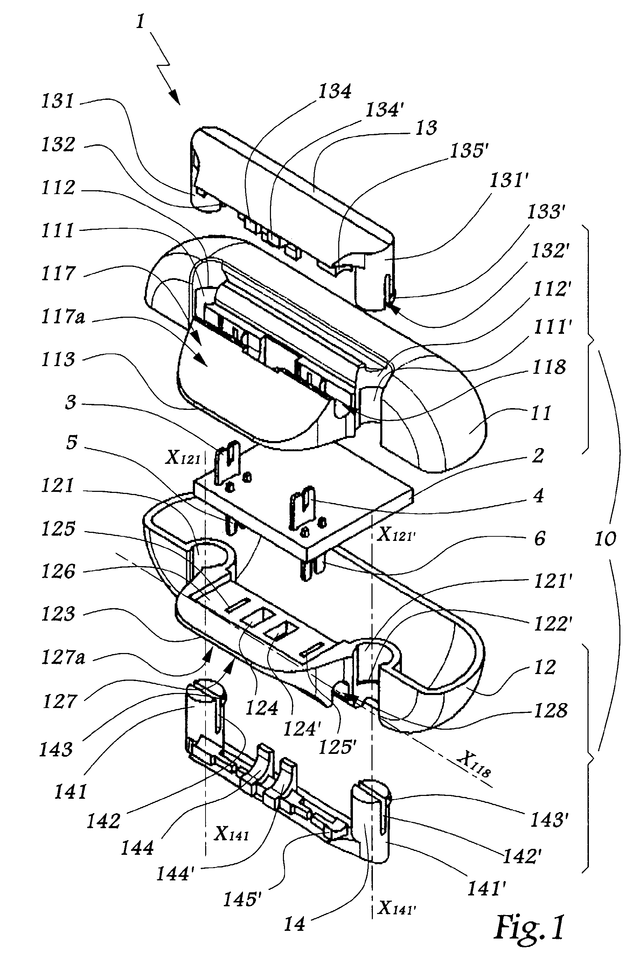

La demi-coque 12 forme deux logements 121 et 121' de forme globalement cylindrique et centrés respectivement sur un axe X₁₂₁, X₁₂₁.. Le tiroir 14 est pourvu de deux doigts également cylindriques 141 et 141' respectivement aptes à coulisser dans les logements 121 et 121' parallèlement aux axes X₁₂₁ et X₁₂₁.. Les doigts 141 et 141' sont chacun pourvus d'une fente transversale 142, 142' leur conférant une élasticité perpendiculairement à leurs axes longitudinaux respectifs X₁₄₁, X₁₄₁,. Chaque doigt 141 ou 141' est pourvu, sur une partie de sa circonférence, d'une saillie 143, 143' apte à coopérer avec un épaulement interne de chaque logement 121 ou 121', un seul épaulement apparaissant à la figure 1 avec la référence 122'. Ainsi, les doigts 141 et 141' peuvent être introduits à l'intérieur des logements 121 et 121' par une déformation élastique de leurs extrémités libres, ces doigts étant ensuite maintenus à l'intérieur de ces logements par la coopération des saillies 143 et 143' et des épaulements 122' et équivalent, tout en pouvant coulisser.

Une structure analogue est utilisée entre le tiroir 13 et la demi-coque 11 qui sont respectivement identiques au tiroir 14 et à la demi-coque 12, les doigts 131 et 131' du tiroir 13 étant reçus dans les logements cylindriques 111 et 111' de la demi-coque 11 dont les épaulements 112 et 112' sont partiellement visibles à la figure 1, ainsi qu'une saillie 133' du doigt 131'.

Le tiroir 14 est également pourvu de deux poussoirs 144 et 144' prévus pour pénétrer respectivement dans des orifices 124 et 124' ménagés dans une partie en saillie 123 de la demi-coque 12. De la même manière, des poussoirs 134 et 134' sont prévus sur le tiroir 13 et peuvent pénétrer dans des orifices de la demi-coque 11 non visibles sur la figure 1 mais prévus dans la coque 11.

La demi-coque 12 comprend également des orifices 125 et 125' de passage des contacts 5 et 6 lorsque le circuit 2 est reçu dans un logement en creux 126 de réception et de coincement du circuit 2. Une structure identique est prévue dans la demi-coque 11, avec une partie en saillie 113 coiffant le bord du circuit 2 équipé des contacts 3 et 4.

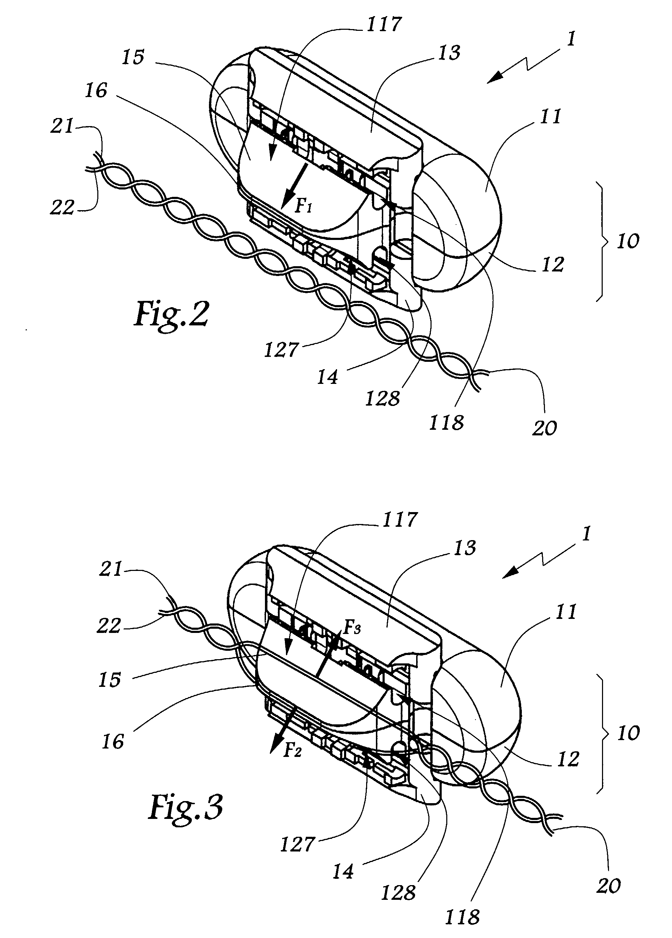

Lorsque le dispositif de l'invention est assemblé et avant son utilisation, il est dans la configuration de la figure 2 dans laquelle les tiroirs 13 et 14 sont écartés l'un de l'autre, les poussoirs 134, 134', 144 et 144' étant distants des orifices 124 et 124', ou équivalents, correspondants.

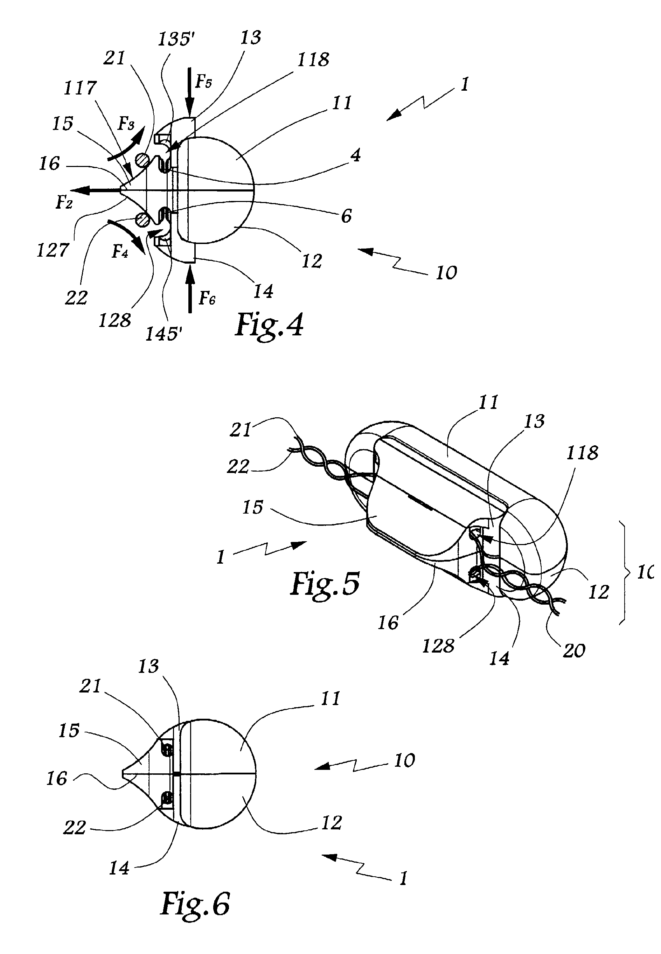

Dans cette position, les parties en saillie 113 et 123 des deux demi-coques assemblées 11 et 12 forment ensemble un nez ou coin 15 ayant une section transversale globalement triangulaire définie à partir d'une arête commune 16 par deux surfaces 117 et 127 légèrement concaves ainsi que cela ressort plus particulièrement des figures 4 et 6. L'arête 16 est identifiée comme une arête commune mais elle est en fait formée par les deux bords antérieurs 117a et 127a des surfaces 117 et 127.

A l'opposé de leurs bords 117a et 127a, les surfaces 117 et 127 jouxtent deux zones en creux 118 et 128 prévues respectivement dans les coques 11 et 12 pour la réception et l'immobilisation des deux conducteurs d'une paire ou jarretière d'une installation téléphonique.

Comme il ressort plus particulièrement de la figure 2, les deux conducteurs 21 et 22 d'une paire 20 appartenant à une installation téléphonique sont le plus souvent torsadés, au point qu'il est mal aisé de raccorder individuellement chacun de ces conducteurs à une unité de régulation.

Comme il ressort plus particulièrement des figures 3 à 6, le nez ou coin 15 permet de positionner aisément les conducteurs 21 et 22 respectivement dans les zones 118 et 128 grâce à un mouvement d'introduction représenté par les flèches F₁ et F₂ aux figures 2 à 4 dans la mesure où les surfaces 117 et 127 constituent, à partir de l'arête 16, des moyens de guidage des conducteurs 21 et 22 en direction des zones 118 et 128 où ces conducteurs sont respectivement reçus en étant alignés selon les axes principaux X₁₁₈et X₁₂₈ de ces zones.

L'introduction du nez ou coin entre les conducteurs 21 et 22 permet, grâce au mouvement représenté par les flèches F₁ et F₂, d'écarter et de dévriller ces conducteurs et de les faire progresser en direction des zones 118 et 128, comme représenté par les flèches F₃ et F₄ aux figures 3 et 4.

Lorsque les conducteurs 21 et 22 sont en place dans les zones 118 et 128, il est possible d'exercer sur les tiroirs 13 et 14 un effort de rapprochement représenté par les flèches F₅ et F₆, ce qui a pour effet, d'introduire les câbles 21 et 22 respectivement dans les contacts 3 et 4 et dans les contacts 5 et 6, de les immobiliser et de les raccorder en série avec le circuit 2. Des zones convexes 145 et 145' sont prévues sur le tiroir 14 pour guider le conducteur 22 en direction des contacts 5 et 6. Des zones équivalentes, dont une seule apparaît avec la référence 135' sur les figures 1 et 4 sont prévues sur le tiroir 13. Ainsi, les zones 135' et équivalentes, 145 et 145' constituent autant de poussoirs des conducteurs en direction des contacts 3 à 6.

Par ailleurs, les poussoirs 144 et 144' coopèrent avec les orifices 124 et 124' pour sectionner le conducteur 22 en deux endroits lors du rapprochement des tiroirs 13 et 14 car le conducteur est emprisonné, au fond de la zone 128, entre les poussoirs 144 et 144' d'une part et les orifices 124 et 124' d'autre part. Ainsi, le conducteur 22 ne risque pas de court-circuiter le circuit 2 entre les contacts 5 et 6. De la même manière, les poussoirs 134 et 134' permettent de sectionner le conducteur 21 grâce au mouvement de rapprochement représenté par les flèches 5 et 6.

En position d'utilisation représentée aux figures 5 et 6, le dispositif 1 présente une forme compacte allongée selon la direction des conducteurs 21 et 22, la forme globalement arrondie des coques 11 et 12 évitant de blesser les paires de conducteurs voisines.

Le dispositif de l'invention est particulièrement simple à utiliser, même avec une paire de conducteurs torsadés, puisqu'il suffit à un technicien d'introduire le coin 15 entre les deux conducteurs 21 et 22 d'une paire et de rapprocher les tiroirs 13 et 14 pour raccorder en série les conducteurs au circuit 2 et de sectionner ces conducteurs. Il est donc possible d'équiper les nombreuses "jarretières" d'un central téléphonique en un minimum de temps, avec une fiabilité optimale car le technicien manipule une seule jarretière 20 à la fois.

Selon une variante non représentée de l'invention, le circuit 2 peut être supporté par une carte disposée dans les demi-coques 11 et 12 selon un plan globalement parallèle aux directions de déplacement des tiroirs 13 et 14. Dans ce cas, les contacts auto-dénudants 3 à 6 s'étendent à partir d'une même face de cette carte et sont courbés à environ 90° pour pénétrer dans les orifices 125, 125' et équivalents.

Selon une autre variante non représentée de l'invention, les poussoirs 144 et 144' peuvent être remplacés par un unique poussoir coopérant avec un unique orifice de la demi-coque 12, le conducteur 22 étant alors sectionné en un seul point, ce qui est suffisant. Une structure analogue est alors adoptée pour le tiroir 13 et la demi-coque 11.

Cependant, la version représentée du dispositif, qui comprend deux tels poussoirs 144 et 144' par tiroir, permet de garantir que la partie du conducteur comprise entre ses deux points de sectionnement est évacuée par gravité, ce qui garantit la non continuité du conducteur en question.

## Revendications

1. Dispositif (1) de contrôle et/ou de régulation d'un paramètre physique du courant transitant dans une paire (20) de conducteurs (21, 22) d'une installation téléphonique comprenant un circuit électronique (2) de contrôle et/ou de régulation dudit paramètre, caractérisé en ce qu'il comprend une enveloppe (10) de protection dudit circuit définissant deux zones (118, 128) aptes à recevoir chacune un conducteur (21, 22) de ladite paire dans une position de raccordement électrique audit circuit, ladite enveloppe formant un organe (15) de dévrillage et de guidage (F₁-F₄) desdits conducteurs vers lesdites zones.

2. Dispositif selon la revendication 1, caractérisé en ce que ledit organe (15) de dévrillage et de guidage est constitué par une partie (113, 123) de ladite enveloppe (10) apte à être insérée (F₁, F₂) entre lesdits conducteurs (21, 22).

3. Dispositif selon l'une des revendications 1 ou 2, caractérisé en ce que ledit organe (15) de dévrillage de guidage a, en coupe transversale, un profil en forme de coin.

4. Dispositif selon la revendication 3, caractérisé en ce que ledit organe (15) de dévrillage et de guidage présente deux surfaces (117, 127) divergentes, à partir d'une arête (16) d'introduction (F₁, F₂) entre lesdits conducteurs (21, 22), en direction desdites zones de réception. (118, 128)

5. Dispositif selon l'une des revendications précédentes, caractérisé en ce qu'il comprend des moyens (13, 14) de verrouillage desdits conducteurs dans lesdites zones de réception (118, 128).

6. Dispositif selon la revendication 5, caractérisé en ce que lesdits moyens comprennent au moins un tiroir (13, 14) pourvu d'au moins un poussoir (135', 145, 145') apte à diriger un conducteur (21, 22) vers un contact auto-dénudant (3-6) raccordé audit circuit (2).

7. Dispositif selon la revendication 6, caractérisé en ce que ledit tiroir (13, 14) est pourvu d'un poussoir (134, 134', 144, 144') apte à coopérer avec une partie fixe (124, 124') de ladite enveloppe (10) pour sectionner ledit conducteur (21, 22).

8. Dispositif selon l'une des revendications 6 ou 7, caractérisé en ce que ledit tiroir (13, 14) est pourvu de moyens de retenue (112, 112', 122', 133', 143, 143') par rapport à une partie principale (11, 12) de ladite enveloppe (10).

9. Dispositif selon l'une des revendications 6 à 8, caractérisé en ce qu'il comprend deux tiroirs (13, 14) disposés en vis-à-vis et aptes à diriger, par un mouvement (F₃, F₄) de rapprochement desdits tiroirs, chacun un conducteur (21, 22) vers une zone de réception (118, 128).

10. Installation téléphonique, notamment central téléphonique, caractérisée en ce qu'elle est équipée d'au moins un dispositif (1) selon l'une des revendications précédentes.
